# EUROPÄISCHE PATENTSCHRIFT

(11) **EP 2 167 860 B1**
(45) Veröffentlichungstag und Bekanntmachung des Hinweises auf die Patenterteilung: **14.11.2012**
(21) Anmeldenummer: 08760060.7
(22) Anmeldetag: 27.05.2008
(51) Int. Cl.: F16L 25/01, F16L 53/00

(54) **ANSCHLUSSVORRICHTUNG FÜR MEDIENFÜHRENDE, ELEKTRISCH BEHEIZBARE SCHLÄUCHE**
CONNECTING DEVICE FOR MEDIA-CONDUCTING, ELECTRICALLY HEATABLE PIPES
DISPOSITIF DE RACCORD POUR DES TUYAUX QUI CONDUISENT DES MILIEUX ET QUI PEUVENT ÊTRE CHAUFFÉS ÉLECTRIQUEMENT

(30) Priorität: 12.06.2007 DE 102007027620
(43) Veröffentlichungstag der Anmeldung: 31.03.2010
(73) Patentinhaber: ContiTech Schlauch GmbH, 30165 Hannover (DE)
(72) Erfinder: DUDE, Holger, 34516 Vöhl-Obernburg (DE); KOCH, Harald, 35110 Frankenau-Alten Lotheim (DE); ALBERT, Karsten, 34537 Bad Wildungen (DE); DARGEL, Christoph, 34549 Edertal-Bergheim (DE)
(74) Vertreter: Finger, Karsten
(86) Internationale Anmeldenummer: PCT/EP2008/056462
(87) Internationale Veröffentlichungsnummer: WO 2008/151924

(56) Entgegenhaltungen:
- DE-A1- 1 945 008
- US-A- 4 881 909
- US-A- 4 894 021

## Beschreibung

Die Erfindung betrifft ein Anschlussvorrichtung für medienführende, elektrisch beheizbare Schläuche nach dem Oberbegriff des Anspruchs 1.

Elektrisch beheizbare Schläuche für den Einsatz in Kraftfahrzeugen sind vielfältig bekannt. Das in diesen Schläuchen zwischen zwei Anschlussstellen fließende Medium wird von diesen Schläuchen beheizt.

Ein beheizbarer Schlauch mit wenigstens einem zur Erwärmung eines im Schlauch fließenden Mediums dienenden elektrischen Heizleiter ist beispielsweise aus der DE 102 01 920 A1 bekannt, wobei sich der Heizleiter über zumindest einen Teilbereich der Schlauchlänge erstreckt und aus einer metallischen Seele und einer Ummantelung besteht.

Der Heizleiter ist üblicherweise in einer Schicht des Schlauches eingebettet. Bei einem mehrschichtigen Schlauch kann der Heizleiter auch zwischen zwei Schichten angeordnet sein. Die Enden des Heizleiters sind freigelegt, um sie an eine zum Betreiben des Heizleiters erforderliche Spannungsquelle anschließen zu können. Üblicherweise sind die freigelegten Enden des Heizleiters an einem Ende des Schlauches angeordnet. Es ist aber auch möglich, dass jeweils ein freigelegtes Ende des Heizleiters an einem Ende des Schlauches angeordnet ist.

Die freigelegten Enden des Heizleiters werden mit einem elektrischem Anschluss (Stecker) versehen und dann an eine Spannungsquelle angeschlossen. Da die Spannungsquelle üblicherweise nicht direkt am Schlauch angeordnet ist, müssen die freigelegten Enden des Heizleiters eine vorgegebene Länge aufweisen, um sie über den Stecker an die Spannungsquelle anschließen zu können.

Aus der EP 1 329 660 B1 ist ein flexibler mehrschichtiger beheizbarer Schlauch mit wenigstens einer Verstärkungsschicht und einer elastomeren Außenschicht sowie einem zur Erwärmung eines im Schlauch fließenden Mediums dienenden elektrischen Heizleiters bekannt. Der Heizleiter erstreckt sich über zumindest einen Teilbereich der Schlauchlänge und besteht aus einer metallischen Seele und einer Ummantelung, wobei der Heizleiter außerhalb der äußeren Lage der Verstärkungsschicht aber unter oder innerhalb der elastomeren Außenschicht eingebettet ist. Um eine einfache und sichere elektrische Kontaktierung des Heizleiters mit einer Spannungsquelle möglich zu machen, weist die elastomere Außenschicht eine geringere Festigkeit als der Heizleiter auf, die so bemessen ist, dass der Heizleiter durch eine radial nach außen einwirkende Kraft unter Durchtrennen der ursprünglichen oder geschwächten elastomeren Außenschicht aber ohne Schädigung seiner metallischen Seele und seiner Ummantelung freilegbar und unmittelbar mit einem elektrischen Anschluss verbindbar ist. Der Heizleiter verläuft vorzugsweise zumindest in einem Teilbereich der Schlauchlänge wendelförmig unter oder innerhalb der elastomeren Außenschicht.

Durch die Anordnung des Heizleiters außerhalb der äußeren Lage der Verstärkungsschicht aber unter oder innerhalb der elastomeren Außenschicht lässt sich der Heizleiter ohne Eingriff in die Verstärkungsschicht freilegen. Dieser Vorgang kann im einfachsten Fall mit einer Zange durchgeführt werden, mit der die am stirnseitigen Ende eines Schlauchabschnittes frei zugänglichen Enden des Heizleiters erfasst und radial nach außen gezogen werden. Durch Erhalt der Ummantelung wird hierbei die elektrische Isolation gewahrt, so dass es zu keiner Beeinträchtigung der metallischen Seele durch Korrosion oder Kurzschluß in Folge eindringender Feuchtigkeit kommen kann. Auch die Funktion der elastomeren Außenschicht wird beibehalten, denn die elastomere Außenschicht wird nur in dem unmittelbaren Bereich aufgetrennt, in dem der Heizleiter radial nach außen gezogen wird. Im übrigen Bereich bleibt die elastomere Außenschicht völlig unbeeinträchtigt. Der Heizleiter kann daher unmittelbar, also ohne zusätzliche Isolierung zu einem elektrischen Anschluss geführt und dort elektrisch verbunden werden.

Nachteilig daran ist, dass die eine vorgegebene Länge aufweisenden freigelegten Enden des Heizleiters ab ihrem Austritt aus dem Schlauch bis zu ihrer Anschlussstelle nahezu vollkommen ungeschützt sind.

Um einen Schutz der freigelegten Enden des Heizleiters über eine vorgegebene Länge ab ihrem Austritt aus dem Schlauch bis zu ihrem Anschluss an ein elektrisches Bauteil (z.B. Spannungsquelle) zu gewährleisten, ist es aus EP 1 610 049 A2 bekannt, ein Rohrstück, auf das Schlauchende aufzustecken. Der Mantel des Rohrstücks ist mit einem im Winkel zur Längsachse des Rohrstücks angeordneten, rohrförmigen Stutzen verbunden, in dem die freigelegten Enden des Heizleiters geführt werden, wobei der Mantel einen Durchlass zum Stutzen aufweist. Anspruch 1 basiert auf diesem Dokument.

Durch diese Ausbildung wird im montierten Zustand des Schlauchverbindungssystems erreicht, dass die am Schlauchende über eine vorgegebene Länge freigelegten Enden des Heizleiters sofort nach ihrem Austritt aus dem Schlauch bis zu ihrem Anschluss an ein elektrisches Bauteil nicht freiliegen, sondern geschützt in dem mit dem Rohrstück verbundenen Stutzen geführt sind. Der Stutzen ist vorzugsweise im montierten Zustand nach Art eines 45°- oder 90°-Winkelstücks ausgebildet. Dadurch können die Enden des Heizleiters zu einem über dem Schlauch angeordneten elektrischen Bauteil geführt werden.

Die beschriebene Technik der beheizbaren Schläuche hat sich bei dem Transport von flüssigen Medien zwischen zwei Anschlussstellen bzw. Anschlussstutzen von Kfz-Aggregaten wie z.B. Vorratstank, Einspritzeinheit, Pumpe etc., bewährt. In besonderen Einsatzfällen hat es sich aber gezeigt, dass das flüssige Medium in den Schlauchanschlussstutzen der Verbindungsblöcke, die üblicherweise als standardisierte Steckverbinder, insbesondere Schnellsteckverbinder, ausgebildet sind und an den Schlauchenden angeordnet sind, einfrieren kann.

Diese Einfriergefahr ist insbesondere bei Abgasnachbehandlungssystemen zur Verminderung von Stickoxidemissionen einer Brennkraftmaschine der Fall. Dabei wird mit Hilfe der Selectiv-Catalytic-Reduktions-Technologie (SCR) Stickoxid in Luftstickstoff und Wasserdampf umgewandelt. Als Reduktionsmittel wird wässerige Harnstofflösung verwandt, die in einem separaten Vorratsbehälter im Kraftfahrzeug mitgeführt wird. Die wässrige Harnstofflösung wird aus dem Vorratsbehälter über ein Fördermodul bzw. eine Pumpe herausgefördert und einem Dosiermodul zugeführt, von dem die Harnstofflösung dosiert in den Abgasstrom vor dem Katalysator eingespritzt wird. Überschüssiges Reduktionsmittel wird von dem Fördermodul über einen Rücklauf zurück in den Vorratsbehälter geleitet.

Zwischen dem Vorratsbehälter, dem Fördermodul und dem Dosiermodul sind Schlauchleitungen zur Förderung des Reduktionsmittels vorhanden. Diese Schlauchleitungen müssen mit den genannten Aggregaten zur Herstellung der Fluidverbindung verbunden werden.

Für die Schlauchanschlüsse an die Aggregate sind die im Automobilbau standardisierten Schnellsteckverbinder an den Schlauchenden einsetzbar, deren Aufnahmeteil an den Aggregaten bauseitig angebracht sind. Die Schnellsteckverbinder (Quick Connectoren) haben den Vorteil einer schnellen Schlauchmontage und sind in vielfältigen Ausführungsformen bekannt. Am häufigsten sind sie an den Aggregaten als "Vaterteil" ausgebildet und an den Schlauchenden als "Mutterteil", das einen Anschlussstutzen für das Schlauchende aufweist, auf den das Ende des zu verbindenden Schlauchs mediendicht aufgeschoben und befestigt wird.

Die Schlauchleitungen zwischen Vorratsbehälter und der Abgasleitung müssen beheizbar sein, da die Gefahr des Einfrierens der wässrigen Harnstofflösung ab minus 11°C besteht. Es ist bekannt, die Gefahr des Einfrierens durch den Einsatz der bekannten elektrisch beheizbaren Schläuche abzuwenden. Obwohl diese elektrisch beheizbaren Schläuche sich bewährt haben, sind in extremen Anwendungsfällen die Steckverbinder die Schwachstelle der Abgasbehandlungssysteme hinsichtlich der Einfriergefahr. Die Einfriergefahr in den Steckverbindungen selbst bleibt bestehen.

Um eine Vorrichtung zu schaffen, die einen Einfrierschutz der wässrigen Harnstofflösung auch in den Anschlüssen der Schlauchleitungen an den zu verbindenden Aggregaten ermöglicht, könnten für die Schlauchanschlüsse kühlwasserbeheizbare Verbindungsblöcke verwendet werden, welche derart ausgebildet sind, dass das temperierbare Kühlwasser durch sie durchgespült wird. Dadurch könnten nicht nur die Schläuche, sondern auch die Steckverbinder aufgetaut werden.

Auch wäre der Einsatz von speziellen Schnellsteckverbindern (Quick-Connectoren), die ein separates elektrisches Heizelement (z. B. beheizbares Keramik-Bauteil) aufweisen, denkbar. Nachteilig ist, dass dieses eine sehr teure und aufwendige Lösung ist, die außerdem einen zusätzlichen Elektroanschluss (Stecker) braucht.

Der Erfindung liegt die Aufgabe zugrunde, eine Anschlussvorrichtung der eingangs beschriebenen Art zu schaffen, durch die der gesamte Leitungszweig, also Schlauch und die Anschlussstellen von Schlauch und der zu verbindenden Aggregate, mit einer durchgehenden direkten Beheizbarkeit ausgestattet ist und die sich durch eine kostengünstige Lösung mit geringem technischen Aufwand auszeichnet.

Die Aufgabe wird erfindungsgemäß durch die Merkmale im Kennzeichen des Anspruchs 1 gelöst.

Die Schlauchanschlüsse können weiterhin mit Standard-Steckverbindern, insbesondere Standard-Schnellsteckverbindern (Quick-Connectoren) ausgestattet werden. Es wird kein zusätzlicher Elektroanschluss notwendig, da der bzw. die im Schlauch vorhandene(n) Heizleiter zum Beheizen auch des Schnellsteckverbinders genommen werden.

Die zylindrische Heizleiteraufnahme sitzt auf einem zylindrischen Gehäusebereich des Schnellsteckverbinders und nimmt in der in die Außenoberfläche eingebrachten Wendelnut die freien Enden des oder der Heizleiter des beheizbaren Schlauches auf.

In vorteilhafter Ausgestaltung der Erfindung ist über die zylindrische Heizleiteraufnahme eine Schutzhülse koaxial aufgeschoben, die mit der Heizleiteraufnahme verrastbar ist. Durch die mit der Heizleiteraufnahme verrastete Schutzhülse ist der Zusammenbau der Anschlussvorrichtung gegen Verrutschen gesichert. Zudem sind die wendelförmigen Heizleiter durch die Schutzhülse abgedeckt. Sie ragen nur mit ihren Anschlußenden aus einer stirnseitigen Ausnehmung der Schutzhülse heraus.

In weiterer vorteilhafter Ausgestaltung der Erfindung weist die Schutzhülse eine stirnseitige, zum Steckverbinder hin offene Ausnehmung auf. Durch diese Ausnehmung ragen der oder die Heizleiter mit ihren Anschlußenden aus der Schutzhülse heraus und können kontaktiert werden.

In weiterer Ausgestaltung der Erfindung weist die Schutzhülse eine von dem Steckverbinder wegweisendes zylindrisches Verlängerungsteil auf, dessen Innendurchmesser geringfügig größer ist als der Außendurchmesser des verbundenen beheizbaren Schlauches. Durch dieses zylindrische Verlängerungsteil wird der das Schlauchende aufnehmende Anschlussstutzen kräftemäßig entlastet. Querkräfte werden direkt in das Steckverbindergehäuse eingeleitet.

In weiterer vorteilhafter Ausgestaltung der Erfindung weist die zylindrische Heizleiteraufnahme axiale, nicht durchgehende Schlitze und an ihrem dem Steckverbinder gegenüberliegenden Ende im Innenumfang einen einen Hinterschnitt bildenden Bund auf. Dadurch ist die zylindrische Heizleiteraufnahme im Umfang federnd ausgebildet und kann nach dem Aufschieben mit dem Bund am zylindrischen Gehäusebereich einrasten.

In weiterer vorteilhafter Ausgestaltung der Erfindung ist die zylindrische Heizleiteraufnahme in etwa axial halbzylindrisch offen und als halbschalenförmiges Teil ausgebildet, dessen Querschnitt sich über einen Kreisbogen von 190° bis 200° erstreckt. Durch diese Ausbildung einer Heizleiteraufnahme kann auch ein standardmäßiger 90°-Steckverbinder beheizt werden.

In weiterer vorteilhafter Ausgestaltung der Erfindung weist die Schutzhülse einen kreisbogenförmigen Umfangsquerschnitt von 190° bis 200° auf. Durch eine derartige Schutzhülse können die Heizleiteraufnahmen auch eines 90°-Steckverbinders geschützt werden.

In vorteilhafter Weise ist am Ende der schalenförmig offenen Schutzhülse ein ebenfalls halbschalenförmig offenes Verlängerungsteil rechtwinklig angeordnet. Dieses schalenförmige Teil nimmt vom Schlauch ausgehende Querkräfte auf und leitet sie direkt in das Steckverbindergehäuse.

Durch die beheizbaren Anschlüsse ist der gesamte Leitungszweig, z.B. der Harnstofflösung von dem Vorratsbehälter bis zur Abgasleitung, mit einer durchgehenden direkten Beheizbarkeit ausgestattet. Eine Kältebrücke innerhalb des Leitungszweiges ist nicht mehr vorhanden.

Anhand der Zeichnung werden nachstehend zwei Ausführungsbeispiele der Erfindung näher erläutert. Es zeigt
- Fig. 1: eine Anschlussvorrichtung mit einem weiblichen Schnellsteckverbinder mit einem Anschlussstutzen zur festen Aufnahme des Endbereichs eines elektrisch beheizbaren Schlauches,
- Fig. 2: eine modifizierte Anschlussvorrichtung mit einem weiblichen Schnellsteckverbinder, dessen Anschlussstutzen zur Aufnahme des Schlauchendes um 90° aus der Vorrichtungsachse angeordnet ist.

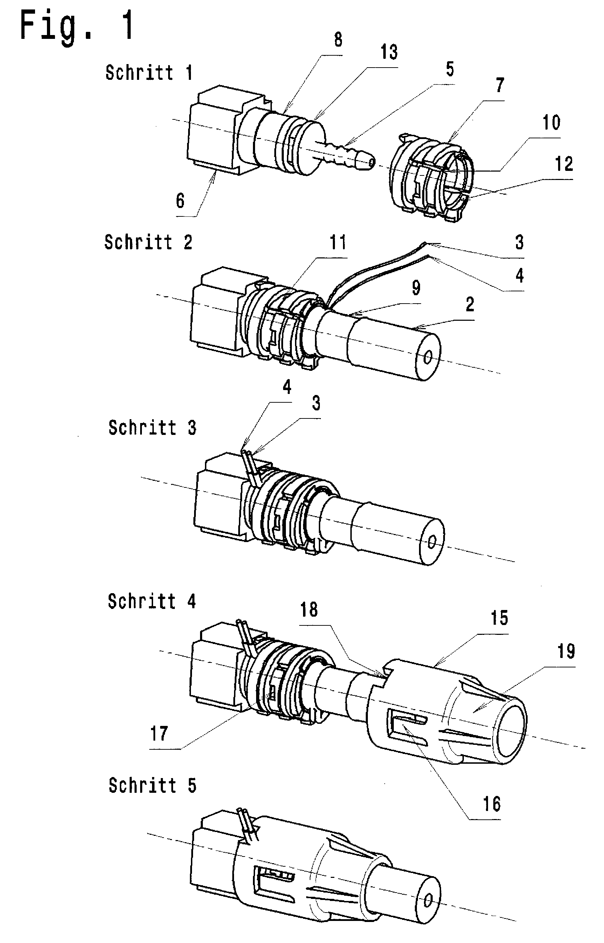

Die in Fig.1 in fünf Zusammenbauschritten gezeigte Anschlussvorrichtung nimmt das Ende eines elektrisch beheizbaren Schlauches 2 auf. Die mit einem weiblichen Schnellsteckverbinder 6 als Hauptbauteil ausgebildete Anschlussvorrichtung wird nach der erfolgten Konfektion mit dem Schlauchende an einem hier nicht gezeigten Aggregat, z.B. einem Vorratstank, einer Einspritzeinheit, einer Pumpe etc., das als Gegenstück ein männliches Steckverbinderteil bereits bauseitig angebracht aufweist, durch einfaches Aufstecken montiert. Die weibliche Steckkonstruktion ist in der perspektivischen Darstellung nicht sichtbar und liegt entgegengesetzt zum Anschlussstutzen 5.

Der nur mit einem kurzen Abschnitt gezeigte Schlauch 2 wird mit zwei gewendelten Heizleitern 3 und 4, auch oft Heizlitzen genannt, erwärmt, die in den Schlauchaufbau integriert sind. Zum Konfektionieren der hier nicht gezeigten elektrischen Stecker werden am Ende des Schlauches 2 die einzelnen Heizleiter 3 und 4 freigelegt. Dabei werden die beiden Heizleiter 3 und 4 am Schlauchende etwas länger freigelegt als im Fall einer direkt folgenden Steckerkonfektionierung benötigt würde. Das dadurch leiterfreie Schlauchstück wird abgeschnitten.

Dann wird eine zylindrische Heizleiteraufnahme 7 über den Anschlussstutzen 5 des Standard-Schnellsteckverbinders 6 auf einen zylindrischen Bereich 8 des Steckverbindergehäuses geschoben (Schritt 1). Die zylindrische Heizleiteraufnahme 7 ist aufgrund axialer, nicht durchgehender Schlitze 10 im Umfang federnd ausgebildet und rastet nach dem Aufschieben mit einer an einem Ende im Innenumfang ausgebildeten umlaufenden Rippe 12 hinter einen Hinterschnitt bildenden Bund 13 des Schnellsteckverbinders 6 ein.

Danach wird der Schlauch 2 mit seinem Schlauchende auf einen Anschlussstutzen 5 des Steckverbinders 6 geschoben. Ein Pressring 9 wird auf dem Schlauch 2 zum Fixieren desselben auf dem Anschlussstutzen 5 verpresst (Schritt 2).

Die freien Enden der beiden Heizleiter 3 und 4 werden in eine eingängige Wendelnut 11 in der Außenoberfläche der Heizleiteraufnahme 7 gewendelt (Schritt 3). Die Heizleiteraufnahme 7 kann auch mit einer mehrgängigen Nutaufnahme für die Heizleiter ausgestattet sein.

Um diesen Aufbau zu fixieren, wird eine gegebenenfalls in einer axialen Ebene geteilte Schutzhülse 15 über die Heizleiteraufnahme 7 geschoben (Schritt 4). Diese Schutzhülse 15 ist so konstruiert, dass sie in die Heizleiteraufnahme 7 mit zwei Rastzungen 16 umfangsmäßig in Ausnehmungen 17 einrastet und somit der Aufbau nicht mehr verrutschen kann (Schritt 5). Die Schutzhülse 15 weist stirnseitig eine zum Steckverbinder hin offene Ausnehmung 18 auf.

Durch die Schutzhülse 15 wird die Beheizung des Steckverbinders 6 durch die Heizleiter 3 und 4 abgedeckt. Die Heizleiter 3 und 4 sind geschützt und isoliert und ragen nur mit ihren Anschlußenden aus der Schutzhülse 15 heraus.

Werden Schläuche mit sehr kleinem Durchmesser verwendet, ist dementsprechend der Anschlussstutzen 5, der als Schlauch-Stutzen ausgebildet ist, sehr dünnwandig und somit sehr zerbrechlich. Unter bestimmten Bedingungen (hohe Querkraft) könnte der Anschlussstutzen 5 am Übergang zum Steckverbindergehäuse abbrechen.

Um den Anschlussstutzen 5 kräftemäßig zu entlasten, ist die Schutzhülse 15 um einen zylindrischen Teil 19 verlängert, der einen etwas größeren Innendurchmesser als der Außendurchmesser des umfassten Schlauches 2 aufweist. Am anderen Ende liegt der zylindrische Teil der Schutzhülse 15 auf dem Außenumfang der Heizleiteraufnahme 7. Wird der Schlauch 2 belastet, nimmt die Schutzhülse 15 die Querkräfte auf und leitet sie direkt in das Steckverbindergehäuse 6 ein.

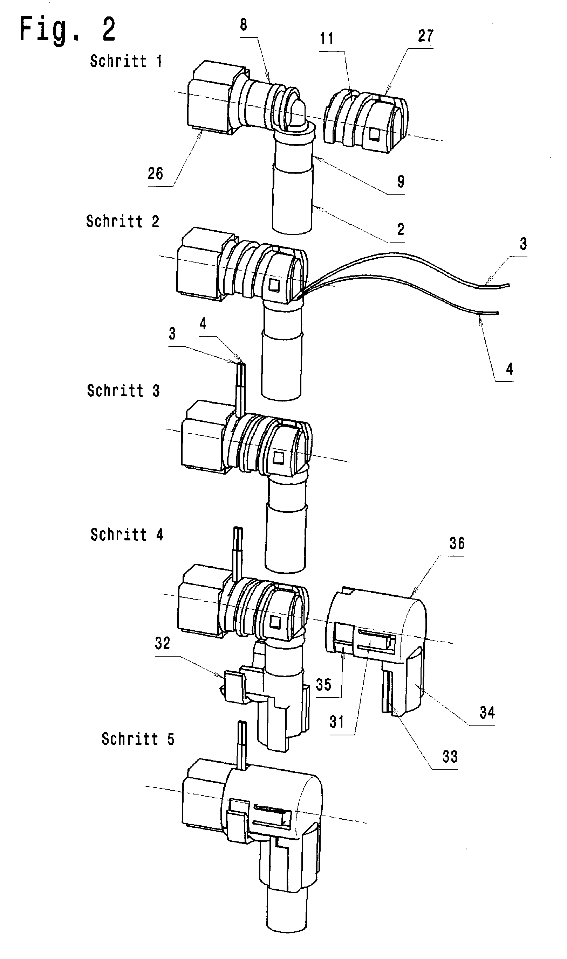

Die in Fig. 2 in fünf Züsammenbauschritten gezeigte modifizierte Anschlussvorrichtung nimmt das Ende eines elektrisch beheizbaren Schlauches 2 auf. Gleiche Bauteile wie in Fig. 1 beschrieben, werden nachfolgend mit den gleichen Bezugszahlen versehen.

Der Schlauch 2 wird mit zwei gewendelten Heizleitern 3 und 4 erwärmt, die in den Schlauchaufbau integriert sind. Zum Konfektionieren der hier nicht gezeigten elektrischen Stecker werden am Ende des Schlauches 2 die einzelnen Heizleiter 3 und 4 freigelegt. Dabei werden die beiden Heizleiter 3 und 4 am Schlauchende etwas länger freigelegt als im Fall einer direkt folgenden Steckerkonfektionierung benötigt würde. Das dadurch leiterfreie Schlauchstück wird abgeschnitten.

Der Schlauch 2 wird mit seinem Schlauchende auf einen hier nicht sichtbaren Anschlussstutzen eines 90°- Standard-Schnellsteckverbinders 26 geschoben.

Danach wird ein Pressring 9 auf dem Schlauch 2 zum Fixieren desselben auf dem Anschlussstutzen verpresst.

Dann wird eine Heizleiteraufnahme 27, die umfangsmäßig nicht einen vollen zylindrischen Umfang sondern nur 190° bis 200° umfasst, von oben auf den zylindrischen Bereich 8 des Gehäuses des 90°-Schnellsteckverbinders 26 geschoben.

Die freien Enden der beiden Heizleiter 3 und 4 werden in eine eingängige Wendelnut 11 in der Außenoberfläche der Heizleiteraufnahme 27 gewendelt. Die Heizleiteraufnahme 27 kann auch mit einer mehrgängigen Nutaufnahme für die Heizleiter 3 und 4 ausgestattet sein.

Um diesen Aufbau zu fixieren, wird eine rechtwinklige Schutzhülse 36 über die Heizleiteraufnahme 27 geschoben und rastet umfangsmäßig mit zwei axialen Rastzungen 31 in die Heizleiteraufnahme 27 ein. Über ein Verriegelungselement 32, das von unten in eine Führung 33 am nach unten abgeknickten Schenkel 34 der Schutzhülse 36 eingreift und das in die Schutzhülse 36 in diametral gegenüberliegende Umfangsausnehmungen 35 einrastet, wird die Schutzhülse 36 lageorientiert auf dem Steckverbinder 26 festgehalten.

Werden Schläuche mit sehr kleinem Durchmesser verwendet, ist dementsprechend der Anschlussstutzen, der als Schlauch-Stutzen ausgebildet ist, sehr dünnwandig und somit sehr zerbrechlich. Unter bestimmten Bedingungen (hohe Querkraft) kann der Anschlussstutzen am Übergang zum Gehäuse abbrechen.

Um den Anschlussstutzen kräftemäßig zu entlasten, ist die Schutzhülse 36 um einen halbzylindrisch offenen, schalenförmigen Teil 34 verlängert, der einen etwas größeren Innendurchmesser als der Außendurchmesser des umfassten Schlauches 2 aufweist. Über die formschlüssige Verbindung der Schutzhülse 36 mit dem Verriegelungselement 32 können Querkräfte aufgenommen werden und direkt in das Steckverbindergehäuse eingeleitet werden.

### Bezugszeichenliste

### (Teil der Beschreibung)

- 2: elektrisch beheizbarer Schlauch
- 3: Heizleiter
- 4: Heizleiter
- 5: Anschlussstutzen
- 6: Steckverbinder
- 7: Heizleiteraufnahme
- 8: Zylindrischer Gehäusebereich
- 9: Pressring
- 10: Axiale Schlitze
- 11: Eingängige Wendelnut
- 12: Umlaufende Rippe
- 13: Bund, Hinterschnitt
- 15: Schutzhülse
- 16: Rastzungen
- 17: Ausnehmungen
- 18: Stirnseitige offene Ausnehmung
- 19: Zylindrischer Teil der Schutzhülse
- 27: Heizleiteraufnahme
- 26: 90°-Steckverbinder
- 31: Axiale Rastzungen
- 32: Verriegelungselement
- 33: Führung
- 34: Abgeknickter Schenkel; halbschalenartiges Verlängerungsteil
- 35: Umfangsausnehmungen
- 36: Schutzhülse

## Patentansprüche

1. Anschlussvorrichtung für medienführende, elektrisch beheizbare Schläuche (2), wobei die Anschlussvorrichtung ein Steckverbindungselement (6; 26) aufweist, mit
einer Steckverbindung, die ausgebildet ist, auf ein bauseitig an ein Kfz-Aggregat angebrachtes gegenteiliges Steekverbinderteil aufsteckbar zu sein, mit
einem Anschlussstutzen (5), der ausgebildet ist, ein Ende eines elektrisch beheizbaren Schlauches (2) aufzunehmen, der mit mindestens einem in dem Schlauch (2) über einen Teilbereich der Schlauchlänge eingebetteten elektrischen Heizleiter (3, 4) versehen ist, dessen Ende(n) aus dem Schlauch (2) zur Konfektion mit einem Stecker oder zum Verbinden mit einem elektrischen Bauteil herausgeführt sind, und mit
einem zylindrischen Gehäusebereich (8), an dessen Ende der Anschlusstutzen (5) für das Schlauchende angeordnet ist,
**dadurch gekennzeichnet,**
**dass** die Anschlussvorrichtung eine geschlossen zylindrische oder axial offen zylindrische Heizleiteraufnahme (7; 25) aufweist, die auf den zylindrischen Gehäusebereich (8) aufgeschoben ist und die in ihrer Oberfläche eine Wendelnut (11) aufweist, und dadurch,
**dass** in die Wendelnut (11) der oder die Heizleiter (3, 4) derart gewendelt eingelegt werden können, dass der oder die Heizleiter (3, 4) den zylindrischen Gehäusebereich (8) wendelförmig überdecken.

2. Anschlussvorrichtung nach Anspruch 1, **dadurch gekennzeichnet,**
**dass** über die zylindrische Heizleiteraufnahme (7; 27) eine Schutzhülse (15; 36) koaxial aufgeschoben ist, die mit der Heizleiteraufnahme (7; 27) verrastbar ist.

3. Anschlussvorrichtung nach Anspruch 2, dadurch gekennzeichenet,
dass die Schutzhülse (15; 36) eine stirnseitige, zum Steckverbinder (6; 26) hin offene Ausnehmung (18) aufweist.

4. Anschlussvorrichtung nach Anspruch 2, **dadurch gekennzeichnet**
**dass** die Schutzhülse (15) ein von dem Steckverbinder (6) wegweisendes zylindrisches Verlängerungsteil (19) aufweist, dessen Innendurchmesser geringfügig größer ist als der Außendurchmesser des verbundenen beheizbaren Schlauches (2).

5. Anschlussvorrichtung nach Anspruch 1, **dadurch gekennzeichnet,**
**dass** die zylindrische Heizleiteraufnahme (7) axiale, nicht durchgehende Schlitze (10) aufweist und an ihrem dem Sreckverbindungselement (6) gegenüberliegenden Ende im Innenumfang einen einen Hinterschnitt bildenden Bund (13) aufweist.

6. Anschlussvorrichtung nach Anspruch 1, **dadurch gekennzeichnet,**
**dass** die zylindrische Heizleiteraufnahme (27) in etwa axial halbzylindrisch offen und als halbschalenförmiges Teil ausgebildet ist, das sich im Querschnitt über einen Kreisbogen von 190° bis 200° erstreckt.

7. Anschlussvorrichtung nach Anspruch 1 und Anspruch 6, **dadurch gekennzeichnet,**
**dass** die Schutzhülse (36) einen kreisbogenförmigen Umfangsquerschnitt von 190° bis 200° aufweist.

8. Anschlussvorrichtung nach Anspruch 7, **dadurch gekennzeichnet,**
**dass** am Ende der halbschalenförmig offenen Schutzhülse (36) ein ebenfalls halbschalenförmig offenes Verlängerungsteil (34) rechtwinklig angeordnet ist.

## Claims

1. Connecting device for media-conducting, electrically heatable hoses (2), wherein the connecting device has a plug-in connection element (6; 26), having
a plug-in connection which is designed such that it can be plugged onto a mating plug-in connector part which is mounted at the factory on a motor vehicle assembly, having
a connector element (5) which is designed to receive an end of an electrically heatable hose (2) and which is provided with at least one electrical heating conductor (3, 4) which is embedded in the hose (2) over part of the length of the hose and whose end or ends is/are led out of the hose (2) in order to be fitted with a plug or connected to an electrical component, and having
a cylindrical housing area (8), at whose end the connector element (5) for the hose end is arranged,
**characterized**
**in that** the connecting device has an enclosed cylindrical or axially open cylindrical heating conductor receptacle (7; 25) which is pushed onto the cylindrical housing area (8) and which has a helical groove (11) in its surface, and
**in that** the heating conductor or conductors (3, 4) can be inserted coiled into the helical groove (11) in such a manner that the heating conductor or conductors (3, 4) cover the cylindrical housing area (8) in a helical shape.

2. Connecting device according to Claim 1,
**characterized**
**in that** a protective sheath (15; 36) is pushed on coaxially over the cylindrical heating conductor receptacle (7; 27) and can be latched to the heating conductor receptacle (7; 27).

3. Connecting device according to Claim 2,
**characterized**
**in that** the protective sheath (15; 36) has a front-side cutout (18) which is open toward the plug-in connector (6; 26).

4. Connecting device according to Claim 2,
**characterized**
**in that** the protective sheath (15) has a cylindrical extension part (19) which points away from the plug-in connector (6) and whose internal diameter is slightly larger than the external diameter of the connected heatable hose (2).

5. Connecting device according to Claim 1,
**characterized**
**in that** the cylindrical heating conductor receptacle (7) has axial slits (10) which do not extend through, and at its end lying opposite the plug-in connection element (6) said cylindrical heating conductor receptacle (7) has, in the internal circumference, a collar (13) which forms an undercut.

6. Connecting device according to Claim 1,
**characterized**
**in that** the cylindrical heating conductor receptacle (27) is embodied so as to be open axially approximately in the form of a semi-cylinder and is embodied as a part in the form of a half-shell whose cross section extends over a circular arc of 190° to 200°.

7. Connecting device according to Claim 1 and Claim 6, **characterized**
**in that** the protective sheath (36) has a circular-arc-shaped circumferential cross section of 190° to 200°.

8. Connecting device according to Claim 7,
**characterized**
**in that** arranged at a right angle at the end of the protective sheath (36) which is open in the form of a half-shell is an extension part (34) which is also open in the form of a half-shell.

## Revendications

1. Dispositif de raccordement pour tuyaux flexibles (2) conduisant des fluides et aptes à être chauffés à l'électricité, le dispositif de raccordement présentant un élément (6; 26) de raccordement enfichable doté d'un raccord enfichable configuré pour pouvoir être enfiché sur une pièce complémentaire de liaison enfichable installée sur un ensemble de véhicule automobile,
une tubulure de raccordement (5) configurée pour reprendre une extrémité d'un tuyau flexible (2) apte à être chauffé à l'électricité, doté d'au moins un conducteur électrique de chauffage (3, 4) incorporé dans le tuyau flexible (2) sur une partie de la longueur du tuyau flexible et dont les extrémités sont prolongées au-delà du tuyau flexible (2) pour y installer une fiche ou les raccorder à un composant électrique et
une partie cylindrique de boîtier (8) à l'extrémité de laquelle la tubulure de raccordement (5) de l'extrémité du tuyau flexible est disposée, **caractérisé en ce que**
le dispositif de raccordement présente un logement cylindrique fermé ou cylindrique ouvert axialement (7; 25) pour conducteur de chauffage qui est passé sur la partie cylindrique de boîtier (8) et dont la surface présente une rainure (11) en spirale et
**en ce que** le ou les conducteurs de chauffage (3, 4) peuvent être posés en spirale dans la rainure (11) en spirale de telle sorte que le ou les conducteurs de chauffage (3, 4) recouvrent en spirale la partie cylindrique de boîtier (8).

2. Dispositif de raccordement selon la revendication 1, **caractérisé en ce qu'**une douille de protection (15; 36) qui peut être encliquetée sur le logement (7; 27) pour conducteur de chauffage est passée coaxialement au-dessus du logement cylindrique (7; 27) pour conducteur de chauffage.

3. Dispositif de raccordement selon la revendication 2, **caractérisé en ce que** la douille de protection (15; 36) présente un logement frontal (18) ouvert en direction de la fiche de raccordement (6; 26).

4. Dispositif de raccordement selon la revendication 2, **caractérisé en ce que** la douille de protection (15) présente une pièce cylindrique de prolongement (19) non tournée vers la fiche de raccordement (6) et dont le diamètre intérieur est légèrement plus grand que le diamètre extérieur du tuyau flexible (2) chauffable qui lui est relié.

5. Dispositif de raccordement selon la revendication 1, **caractérisé en ce que** le logement cylindrique (7) pour conducteur de chauffage présente des fentes discontinues (10) sur son extrémité opposée à l'élément (6) de liaison enfichable et dans sa périphérie intérieure un collet (13) qui forme une contre-dépouille.

6. Dispositif de raccordement selon la revendication 1, **caractérisé en ce que** le logement cylindrique (27) pour conducteur de chauffage est configuré sous la forme d'une pièce axialement ouverte en demi-cylindre et en forme de demi-coquille qui s'étend en section transversale sur un arc de cercle de 190° à 200°.

7. Dispositif de raccordement selon la revendication 1 et la revendication 6, **caractérisé en ce que** la douille de protection (36) présente une section transversale périphérique en arc de cercle de 190° à 200°.

8. Dispositif de raccordement selon la revendication 7, **caractérisé en ce qu'**une pièce de prolongement (34) également ouverte en demi-coquille est disposée à angle droit à l'extrémité de la douille de protection (36) ouverte en demi-coquille.
